# EUROPÄISCHE PATENTSCHRIFT

(11) **EP 2 661 541 B1**
(45) Veröffentlichungstag und Bekanntmachung des Hinweises auf die Patenterteilung: **17.12.2014**
(21) Anmeldenummer: 11808878.0
(22) Anmeldetag: 30.12.2011
(51) Int. Cl.: F01D 5/20, F01D 5/28, C04B 35/632, C04B 35/645, C04B 35/80, C04B 41/52, C23C 24/00, C23C 28/00, B22F 7/02, F01D 11/12

(54) **VERFAHREN ZUR HERSTELLUNG EINER SCHUTZSCHICHT FÜR EINE LAUFSCHAUFEL**
METHOD FOR PRODUCING A PROTECTIVE LAYER FOR A ROTOR BLADE
PROCÉDÉ DE FABRICATION D'UNE COUCHE DE PROTECTION POUR AUBE MOBILE

(30) Priorität: 22.02.2011 EP 11155382
(43) Veröffentlichungstag der Anmeldung: 13.11.2013
(73) Patentinhaber: Siemens Aktiengesellschaft, 80333 München (DE)
(72) Erfinder: AHMAD, Fathi, 41564 Kaarst (DE); PAUL, Uwe, 40882 Ratingen (DE)
(86) Internationale Anmeldenummer: PCT/EP2011/074282
(87) Internationale Veröffentlichungsnummer: WO 2012/113486

(56) Entgegenhaltungen:
- EP-A1- 0 661 415
- EP-A1- 1 864 742
- EP-A1- 2 224 039
- CH-A- 318 286
- DE-A1- 4 239 391
- DE-A1-102005 040 184
- DE-A1-102009 012 945
- US-A1- 2003 082 054

## Beschreibung

Die Erfindung betrifft ein Verfahren zur Herstellung einer Schutzschicht für eine Laufschaufel einer Strömungsmaschine mit einer in Bezug auf die Achse der Strömungsmaschine in radialer Richtung zum Äußeren der Strömungsmaschine hin über einen Körper der Laufschaufel hinausstehenden Verschleißspitzenwand. Sie betrifft weiter eine derartige Laufschaufel.

Strömungsmaschinen umfassen allgemein kontinuierlich arbeitende Fluidenergiemaschinen wie Verdichter, Dampf- und Gasturbinen. In einer Gasturbine wird Energie aus einem heißen Verbrennungsgas in Bewegungsenergie umgewandelt, die einerseits einen vorgeschalteten Verdichter und andererseits typischerweise einen Generator zur Erzeugung von Strom antreibt. Eine Gasturbine kann aber auch zum Antrieb von Flugzeugen verwendet werden.

Gasturbinen umfassen einerseits feststehende Leitschaufeln, die den Luft- und Gasstrom führen, und am Rotor der Gasturbine befindliche Laufschaufeln, die um die Achse der Strömungsmaschine rotieren. Typischerweise erstrecken sich die Laufschaufeln von der Achse der Strömungsmaschine bis zu einer koaxial dazu angeordneten Innenwand, die somit den Strömungskanal für das Verbrennungsgas definiert. Dabei soll der Abstand zwischen dem Körper der Laufschaufel und der Innenwand möglichst gering gehalten werden, um den Wirkungsgradverlust durch entlang der Innenwand an den Laufschaufeln vorbeiströmendes Verbrennungsgas zu minimieren.

Durch unterschiedliche thermische Ausdehnung von Innenwand und Laufschaufel, sowie Zentrifugalkräfte und radiale Beschleunigungen kann jedoch der Abstand zwischen Innenwand und ihr gegenüberliegenden Laufschaufelspitzen variieren. Um dabei Beschädigungen des Laufschaufelkörpers bzw. der Innenwand zu vermeiden, ist ein gewisser Mindestabstand bei der Konstruktion der Gasturbine einzuplanen.

Um dennoch die durch den Mindestabstand bedingten Wirkungsgradverluste gering zu halten oder zu vermeiden, wird der Laufschaufelkörper üblicherweise mit einer Verschleißspitzenwand versehen, die sich vom Laufschaufelkörper in Richtung der Innenwand, d. h. in Bezug auf die Achse der Gasturbine in radialer Richtung zum Äußeren der Gasturbine hin erstreckt. Diese Verschleißspitzenwand hat eine geringere Dicke als der Laufschaufelkörper und es kann somit ein kontrollierter Abrieb der Verschleißspitzenwand erfolgen. Dabei wird einerseits der Laufschaufelkörper selbst vor Beschädigungen geschützt und andererseits eine Minimierung des Spalts zwischen Laufschaufel und Innenwand erreicht.

Die Verschleißspitzenwand ist jedoch durch ihre geringere Dicke anfälliger gegen die hohe Temperaturbelastung durch das heiße Verbrennungsgas. Zusätzlich ist die Temperatur an der Verschleißspitzenwand durch die radiale Temperaturverteilung im Strömungskanal typischerweise am höchsten. Dies kann zu einer frühzeitigen Korrosion der Verschleißspitzenwand führen, die die Lebensdauer der gesamten Laufschaufel begrenzt.

Daher wird hier häufig eine thermisch isolierende, wärmefeste Beschichtung vorgesehen. Diese thermische Beschichtung wird typischerweise durch übliche Beschichtungsprozesse wie Plasmabeschichtung oder Hochgeschwindigkeits-Flammspritzen aufgebracht. Allerdings benötigen derartige Verfahren häufig eine zusätzliche Haftbeschichtung für eine entsprechende Haftfestigkeit.

Weiter ist aus der CH 318 286 bekannt, auf den Schaufelspitzen eine Schutzschicht mit einer geringen Abriebfestigkeit zu verwenden, um Beschädigungen von Gehäuse und Schaufelspitze zu vermeiden.

US 1 335 002 offenbart ein Verfahren zur Herstellung einer Schutzschicht für eine Laufschaufel nach dem Oberbegriff von Anspruch 1 EP 0273852 offenbart ein weiteres alternatives Verfahren.

Aufgabe der Erfindung ist es daher, ein alternatives Verfahren zu Herstellung einer Schutzschicht für eine Laufschaufel anzugeben, das eine vergleichsweise hohe Lebensdauer der gesamten Laufschaufel ermöglicht und gleichzeitig eine besonders einfache thermische Isolierung der Verschleißspitzenwand erlaubt.

Diese Aufgabe wird erfindungsgemäß gelöst, indem in einen in radialer Richtung stehenden Bereich der Verschleißspitzenwand ein einen in radialer Richtung wirkenden Formschluss erzeugendes Profil eingebracht wird, auf den Bereich ein Metallpulver enthaltender und/oder ein keramischer Schlicker aufgebracht wird, und der Schlicker gesintert wird.

Die Erfindung geht dabei von der Überlegung aus, dass eine vergleichsweise hohe Lebensdauer der gesamten Laufschaufel bei gleichzeitiger Vereinfachung des Prozesses der thermischen Isolierung der Verschleißspitzenwand durch ein alternatives Verfahren zum Auftragen einer isolierenden Schicht erreichbar wäre. Insbesondere sollte eine zusätzliche Haftbeschichtung nicht notwendig sein. Dies ist erreichbar, indem alternativ oder zusätzlich zur kraftschlüssigen Verbindung der isolierenden Schicht ein Formschluss gewährleistet werden könnte. Dazu sollte in den zu behandelnden Bereich der Verschleißspitzenwand ein einen in radialer Richtung wirkenden Formschluss erzeugendes Profil eingebracht werden.

Die Profilierung sollte dann mit einem geeigneten Material aufgefüllt werden, um einerseits den Formschluss zu gewährleisten und andererseits eine Minimierung der Oberfläche und damit des Wärmeeintrags zu erzielen. Dabei sollten Materialien zur Anwendung kommen, die eine hohe Wärmebeständigkeit, isolierende Wirkung sowie eine gute Haftfestigkeit im Profil aufweisen. Dies ist erreichbar, indem auf den Bereich ein Metallpulver enthaltender und/oder ein keramischer Schlicker aufgebracht wird, der anschließend zur Erhaltung einer wärmestabilen, festen Schicht gesintert wird. Dadurch ist einerseits eine relativ flexible Formung der Schicht möglich, andererseits ist nach dem Sinterprozess eine gute Haftung und Stabilität gewährleistet.

Typischerweise wird die Laufschaufel aus Stahl in einem Gussprozess hergestellt. Dabei wird die Verschleißspitzenwand direkt zusammen mit dem Laufschaufelkörper gegossen. Um ein besonders einfaches Einbringen des Profils in den gewünschten Bereich der Verschleißspitzenwand zu erreichen, wird in vorteilhafter Ausgestaltung des Verfahrens direkt beim Gießen der Verschleißspitzenwand oder der gesamten Laufschaufel mit Verschleißspitzenwand eingegossen. Alternativ oder zusätzlich wird zumindest ein Teil des Profils nachträglich durch Funkenerodieren aufgebracht. Das Funkenerodieren ermöglicht es, auch komplizierteste geometrische Formen als Profil in hoher Präzision herzustellen.

Vorteilhafterweise wird vor dem Sintern der Schlicker getrocknet und die Form des getrockneten Schlickers bearbeitet. Dies ermöglicht es, die Form der durch den Schlicker aufgebrachten Schicht auf einfache Weise durch mechanisches Bearbeiten präzise zu variieren. Dadurch ergibt sich ein hoher Freiheitsgrad bei der geometrischen Ausgestaltung, so dass eine Vielzahl von Formen der Schutzschicht für die Verschleißspitzenwand erzeugt und getestet werden kann. Dies ermöglicht eine Optimierung der Form der Schutzschicht hinsichtlich der Reibungs- und Wirkungsgradverluste.

Besonders einfach ist eine solche Bearbeitung möglich, wenn der Schlicker bei Zimmertemperatur trocknen kann und keine zusätzliche Wärmebehandlung vor dem Sinterprozess erforderlich ist. Dies ist erreichbar, indem vorteilhafterweise der Schlicker wasserbasiert ist und/oder dem Schlicker ein organisches Bindemittel beigegeben wird.

Ein weiterer Freiheitsgrad bei der Gestaltung der Schutzschicht für die Verschleißspitzenwand ist erzielbar, indem vorteilhafterweise ein Metallpulver enthaltender und ein keramischer Schlicker sequentiell aufgebracht werden. So kann zunächst ein metallischer Schlicker für eine gute Haftung aufgebracht werden und anschließend ein keramischer Schlicker für die wärmefeste Außenschicht. Durch den Sinterprozess werden alle Schichten stabil miteinander verbunden. Denkbar sind auch mehrere wechselnde Schichten oder unterschiedliche Sequenzen von Schichten in unterschiedlichen Bereichen der Verschleißspitzenwand, je nach Anforderung.

In weiterer oder alternativer Ausgestaltung enthält der jeweilige Schlicker keramische Fasern oder Netze. Diese verstärken nach dem Sinterprozess die Struktur der jeweiligen Schicht und verstärken deren Resistenz gegen Brüche oder Delaminierung, i.e. Abtragung der Schicht durch Verschleißprozesse.

Zur Optimierung der Strömungseigenschaften sollte die Verschleißspitzenwand vorteilhafterweise umlaufend entlang des Umfanges der Laufschaufel angeordnet sein. Die Verschleißspitzenwand bildet somit eine radiale Verlängerung des Profils der Laufschaufel und hat somit in axialer Richtung dasselbe Anströmungsprofil. Durch das umlaufende Profil bildet die Verschleißspitzenwand eine in Bezug auf die Achse der Strömungsmaschine in radialer Richtung zum Äußeren der Strömungsmaschine hin angeordnete Vertiefung. Insbesondere diese Vertiefung sollte mit einer entsprechenden Schutzschicht versehen werden, um einerseits eine geringere Temperaturbelastung der Laufschaufelspitze zu ermöglichen und andererseits das Propagieren eventuell auf der Außenseite der Verschleißspitzenwand entstehender Risse in das Innere zu erschweren oder zu verhindern. Dazu umfasst der mit der Schutzschicht versehene Bereich vorteilhafterweise das Innere der Vertiefung. Dadurch, dass die Schutzschicht somit durch ein umlaufendes Profil umschlossen wird, ist auch ein besserer Formschluss und somit eine größere Sicherheit gegen Delaminierung oder Verlust durch Zentrifugalkräfte im Betrieb der Strömungsmaschine gewährleistet.

Bezüglich der Laufschaufel wird die Aufgabe gelöst, indem ein Bereich der Verschleißspitzenwand ein Profil aufweist und auf dem Bereich ein gesinterter, Metallpulver enthaltender und/oder ein keramischer Schlicker aufgebracht ist. Vorteilhafterweise umfasst eine Strömungsmaschine eine mit dem dargestellten Verfahren hergestellte Laufschaufel mit einer Schutzschicht und kommt in vorteilhafter Ausgestaltung in einer Kraftwerksanlage zum Einsatz.

Die mit der Erfindung erzielten Vorteile bestehen insbesondere darin, dass durch die Aufbringung einer Schutzschicht aus gesintertem metallischen und/oder keramischen Schlicker im Bereich der Verschleißspitzenwand ein besonders guter Schutz gegen eine Zerstörung der Verschleißspitzenwand gewährleistet ist und somit eine besonders hohe Lebensdauer der gesamten Laufschaufel erreicht wird. Durch die einfache Ver- und Bearbeitbarkeit des aufgetragenen Schlickers vor dem Sintern können die Dicken der jeweiligen Schichten beliebig variiert werden sowie die Form der Schichten hinsichtlich der Haltbarkeit optimiert werden. Eine zusätzliche Haftbeschichtung kann entfallen. Schließlich ist auch eine schnell durchführbare Überholung von verschlissenen Laufschaufeln am Betriebsort durch Aufbringen einer neuen Schutzschicht möglich.

Ein Ausführungsbeispiel der Erfindung wird anhand einer Zeichnung erläutert. Darin zeigen:
- FIG 1: die radial von der Achse einer Strömungsmaschine weg gerichtete Spitze einer Laufschaufel im Schnitt nach dem Stand der Technik,
- FIG 2: die radial von der Achse einer Strömungsmaschine weg gerichtete Spitze einer Laufschaufel im Schnitt nach dem Einbringen eines Profils in die Verschleißspitzenwand,
- FIG 3: die Spitze der Laufschaufel mit aufgebrachten Schlickern,
- FIG 4: die Spitze der Laufschaufel mit aufgebrachten Schlickern in einer alternativen Ausgestaltung,
- FIG 5: die Spitze der Laufschaufel nach dem Sintern, und
- FIG 6: die Spitze der Laufschaufel nach dem Sintern in einer weiteren alternativen Ausgestaltung.

Gleiche Teile sind in allen Figuren mit denselben Bezugszeichen versehen.

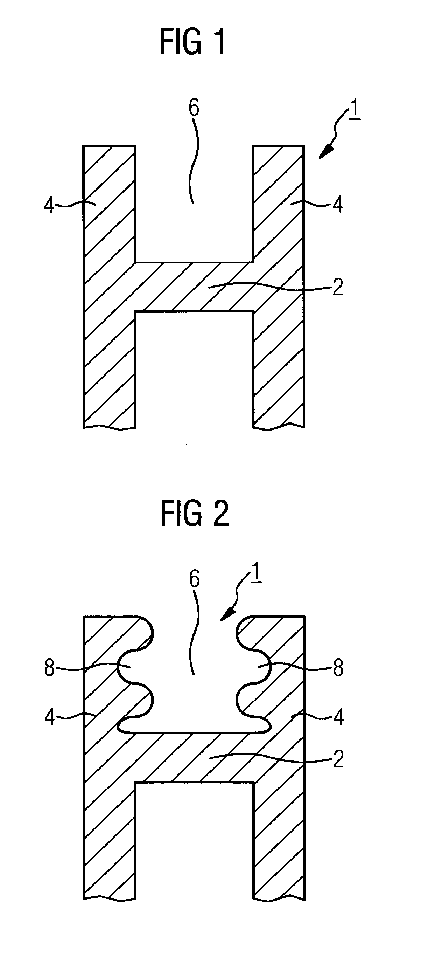

FIG 1 zeigt den oberen Bereich einer Laufschaufel 1, die Laufschaufelspitze 2 im Profil nach dem Stand der Technik. Die Laufschaufelspitze 2 ist aufgrund thermischer Ausdehnung, der Zentrifugalkraft durch die Rotation und weiteren Einflüssen einem erhöhten Verschleiß ausgesetzt. Um Beschädigungen der Laufschaufelspitze 2 durch Berührung der angrenzenden, nicht gezeigten Innenwand einer Strömungsmaschine zu vermeiden und einen kontrollierten Abrieb zu ermöglichen, weist die Laufschaufelspitze 2 eine Verschleißspitzenwand 4 auf. Die Verschleißspitzenwand 4 steht verlängert das Außenprofil der Laufschaufel 1 in radialer Richtung und bildet somit über der Laufschaufelspitze 4 eine Vertiefung 6.

Diese Vertiefung 6 ist besonderen thermischen und mechanischen Belastungen ausgesetzt. Daher sollte sie mit einer Schutzschicht versehen werden, wie es in den folgenden FIGs gezeigt ist.

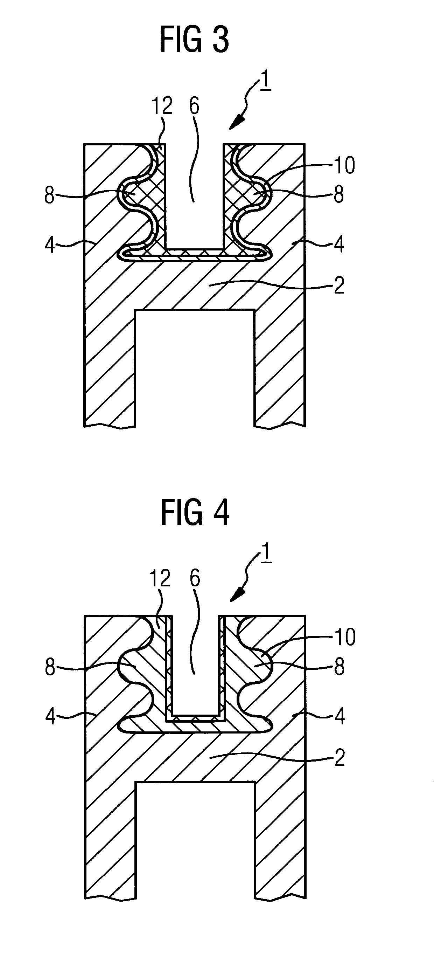

Zunächst wird auf der Innenseite der Verschleißspitzenwand 4, d. h. in der Vertiefung 6 ein Profil 8 eingebracht, gezeigt in FIG 2. Dieses Profil kann entweder direkt eingegossen oder mittels Funkenerodieren eingebracht werden. Auf das Profil wird sodann ein Metallpulver enthaltender Schlicker 10 und ein keramischer Schlicker 12 gebracht, wie in FIG 3 und FIG 4 gezeigt. In FIG 3 wird zunächst eine dünne Schicht Metallpulver enthaltender Schlicker 10 aufgebracht, der eine gleichmäßige Schichtdicke über dem Profil 8 aufweist. Mit dem keramischen Schlicker 12 wird dann eine Egalisierung der Oberfläche erreicht.

In FIG 4 wurde umgekehrt zunächst eine Egalisierung mittels des Metallpulvers enthaltenden Schlickers 10 erreicht und anschließend eine gleichmäßige Schicht keramischen Schlickers 12 aufgebracht. Je nach Anforderungsprofil können die Schichten angepasst werden und auch mehrere unterschiedliche Schichten aufgebracht werden. Das Verfahren ist in dieser Hinsicht sehr variabel.

Im Folgenden wird der Schlicker 10, 12 gesintert. Dadurch wird die Schutzschicht gehärtet und schützt die Verschleißspitzenwand 4 vor thermischen und mechanischen Beanspruchungen. Die Schlicker 10, 12 enthalten zusätzlich keramische Fasern und Netze, um die Festigkeit der Schutzschicht zu erhöhen. Das Profil 8 umfasst Nuten und/oder Rillen, die zumindest teilweise senkrecht zur radialen Richtung ausgerichtet sind. Da der Schlicker in diesen Nuten und Einkerbungen gehärtet ist, bewirkt dies einen Formschluss der Schutzschicht in radialer Richtung.

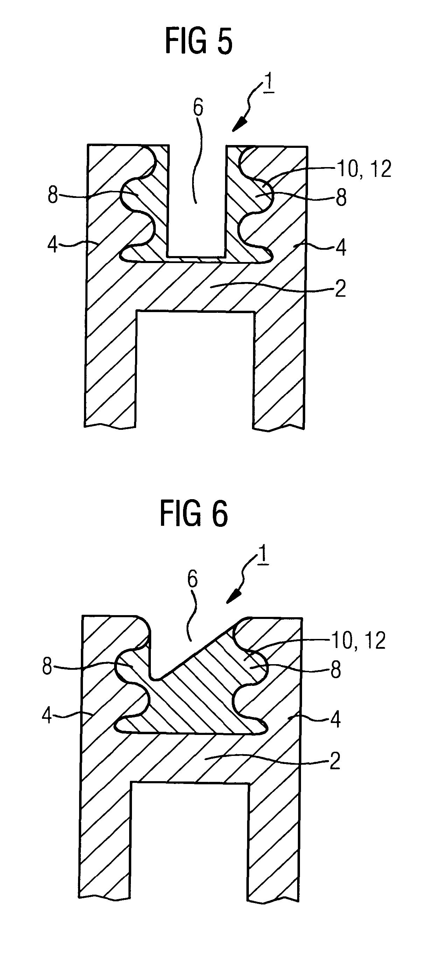

Der Schlicker 10, 12 ist wasserbasiert und es wurde ein organisches Bindemittel beigegeben. Dies ermöglicht ein Trocknen des Schlickers 10, 12 vor dem Sintern, so dass eine Bearbeitung möglich wird, wie in FIG 6 gezeigt. Hier wurde dem getrockneten Schlicker 10, 12 eine Keilform gegeben. Generell erlaubt das Verfahren hohe Freiheitsgrade hinsichtlich der Gestaltung der Schutzschicht, so dass diese beliebig, z. B. hinsichtlich der Aerodynamik, der Festigkeit, Temperaturbeständigkeit oder anderer Parameter optimiert werden kann.

Durch das beschriebene Verfahren wird ein besonders guter Schutz gegen eine Zerstörung der Verschleißspitzenwand 4 gewährleistet und somit eine besonders hohe Lebensdauer der gesamten Laufschaufel 1 erreicht.

## Patentansprüche

1. Verfahren zur Herstellung einer Schutzschicht für eine Laufschaufel (1) einer Strömungsmaschine mit einer in Bezug auf die Achse der Strömungsmaschine in radialer Richtung zum Äußeren der Strömungsmaschine hin über einen Körper der Laufschaufel (1) hinausstehenden Verschleißspitzenwand (4),
- in einen in radialer Richtung stehenden Bereich der Verschleißspitzenwand (4) ein einen in radialer Richtung wirkenden Formschluss erzeugendes Profil (8) eingebracht wird, **dadurch gekennzeichnet, dass**
- auf den Bereich ein Metallpulver enthaltender und/oder ein keramischer Schlicker (10, 12) aufgebracht wird, und der Schlicker (10, 12) gesintert wird.

2. Verfahren nach Anspruch 1,
bei dem das Profil (8) eingegossen und/oder mittels Funkenerodieren eingebracht wird.

3. Verfahren nach einem der vorhergehenden Ansprüche,
bei dem vor dem Sintern der Schlicker (10, 12) getrocknet wird, und
die Form des getrockneten Schlickers (10, 12) bearbeitet wird.

4. Verfahren nach einem der vorhergehenden Ansprüche,
bei dem der Schlicker (10, 12) wasserbasiert ist und/oder dem Schlicker (10, 12) ein organisches Bindemittel beigegeben wird.

5. Verfahren nach einem der vorhergehenden Ansprüche,
bei dem ein Metallpulver enthaltender und ein keramischer Schlicker (10, 12) sequentiell aufgebracht werden.

6. Verfahren nach einem der vorhergehenden Ansprüche,
bei dem der jeweilige Schlicker (10, 12) keramische Fasern oder Netze enthält.

7. Verfahren nach einem der vorhergehenden Ansprüche,
bei dem die Verschleißspitzenwand (4) umlaufend entlang des Umfanges der Laufschaufel (1) angeordnet ist und so eine in Bezug auf die Achse der Strömungsmaschine in radialer Richtung zum Äußeren der Strömungsmaschine hin angeordnete Vertiefung (6) bildet,
wobei der Bereich das Innere der Vertiefung (6) umfasst.

8. Laufschaufel (1) für eine Strömungsmaschine mit einer in Bezug auf die Achse der Strömungsmaschine in radialer Richtung zum Äußeren der Strömungsmaschine hin über einen Körper der Laufschaufel (1) hinausstehenden Verschleißspitzenwand (4),
wobei ein Bereich der verschleißspitzenwand (4) ein einen in radialer Richtung wirkenden Formschluss erzeugendes Profil (8) aufweist **dadurch gekennzeichnet, dass** auf dem Bereich ein gesinterter, Metallpulver enthaltender und/oder ein keramischer Schlicker (10, 12) aufgebracht ist.

9. Strömungsmaschine mit einer Laufschaufel (1) nach Anspruch 8 und/oder einer Laufschaufel,
hergestellt nach dem Verfahren nach einem der Ansprüche 1 bis 7.

10. Kraftwerksanlage mit einer Strömungsmaschine nach Anspruch 9.

## Claims

1. Method for producing a protective layer for a rotor blade (1) of a turbomachine, having a wear tip wall (4) projecting toward the outside of the turbomachine beyond a body of the rotor blade (1) in the radial direction with respect to the axis of the turbomachine,
- a profile (8) producing a radial form fit is introduced into a radial region of the wear tip wall (4), **characterized in that**
- a metal powder-containing slurry (10) and/or a ceramic slurry (12) is applied to the region, and the slurry (10, 12) is sintered.

2. Method according to Claim 1, wherein the profile (8) is cast and/or introduced by means of electric discharge machining.

3. Method according to either of the preceding claims, wherein the slurry (10, 12) is dried before sintering, and
the shape of the dried slurry (10, 12) is machined.

4. Method according to one of the preceding claims, wherein the slurry (10, 12) is water based and/or an organic binder is added to the slurry (10, 12).

5. Method according to one of the preceding claims, wherein a metal powder-containing slurry (10) and a ceramic slurry (12) are applied in sequence.

6. Method according to one of the preceding claims, wherein the respective slurry (10, 12) contains ceramic fibers or gauzes.

7. Method according to one of the preceding claims, wherein the wear tip wall (4) is arranged around the circumference of the rotor blade (1) and thus forms a recess (6) arranged radially toward the outside of the turbomachine with respect to the axis of the turbomachine,
wherein the region encloses the inside of the recess (6).

8. Rotor blade (1) for a turbomachine, having a wear tip wall (4) projecting toward the outside of the turbomachine beyond a body of the rotor blade (1) in the radial direction with respect to the axis of the turbomachine,
wherein a profile (8) producing a radial form fit is present in a region of the wear tip wall (4), **characterized in that** a sintered metal powder-containing slurry (10) and/or a ceramic slurry (12) is applied to the region.

9. Turbomachine having a rotor blade (1) according to Claim 8 and/or a rotor blade,
produced in accordance with the method according to one of Claims 1 to 7.

10. Power plant having a turbomachine according to Claim 9.

## Revendications

1. Procédé de fabrication d'une couche de protection pour une aube ( 1 ) mobile d'une turbomachine, ayant une paroi ( 4 ) de pointe d'usure en saillie par rapport à l'axe de la turbomachine dans la direction radiale par rapport à l'extérieur de la turbomachine au-delà d'un corps de l'aube ( 1 ) mobile,
- dans une partie dans la direction radiale de la paroi ( 4 ) de pointe d'usure, est ménagé un profil ( 8 ) produisant une complémentarité de forme agissant dans la direction radiale, **caractérisé en ce que**
- sur la partie, est déposée une barbotine ( 10, 12 ) contenant de la poudre métallique et/ou céramique et la barbotine ( 10, 12 ) est frittée.

2. Procédé suivant la revendication 1,
dans lequel le profil ( 8 ) est coulé et/ou est ménagé au moyen d'un usinage par étincelage.

3. Procédé suivant l'une des revendications précédentes,
dans lequel on sèche la barbotine ( 10, 12 ) avant le frittage, et
on traite la forme de la barbotine ( 10, 12 ) séchée.

4. Procédé suivant l'une des revendications précédentes,
dans lequel la barbotine ( 10, 12 ) est à base d'eau et/ou un liant organique est ajouté à la barbotine ( 10, 12 ).

5. Procédé suivant l'une des revendications précédentes,
dans lequel on dépose séquentiellement une barbotine ( 10 ) contenant de la poudre métallique et une barbotine ( 12 ) céramique.

6. Procédé suivant l'une des revendications précédentes,
dans lequel la barbotine ( 10, 12 ) respective contient des fibres ou des filets de céramique.

7. Procédé suivant l'une des revendications précédentes,
dans lequel la paroi ( 4 ) de pointe d'usure est disposée autour, le long de la périphérie, de l'aube ( 1 ) mobile et forme ainsi une cavité ( 6 ) disposée vers l'extérieur de la turbomachine dans la direction radiale par rapport à l'axe de la turbomachine,
la partie comprenant l'intérieur de la cavité ( 6 ).

8. Aube ( 1 ) mobile pour une turbomachine ayant une paroi ( 4 ) de pointe d'usure en saillie à l'extérieur de la turbomachine au-delà d'un corps de l'aube ( 1 ) mobile dans la direction radiale par rapport à l'axe de la turbomachine,
dans laquelle une partie de la paroi ( 4 ) de pointe d'usure a un profil ( 8 ) produisant une complémentarité de forme agissant dans la direction radiale,
**caractérisée en ce que**, sur la partie, est déposée une barbotine ( 10, 12 ) frittée contenant de la poudre métallique et/ou céramique.

9. Turbomachine ayant une aube ( 1 ) mobile suivant la revendication 8 et/ou une aube mobile fabriquée par le procédé suivant l'une des revendications 1 à 7.

10. Centrale électrique ayant une turbomachine suivant la revendication 9.
